# EUROPEAN PATENT APPLICATION

(11) **EP 2 850 947 A1**
(43) Date of publication of application: **25.03.2015**
(21) Application number: 12729168.0
(22) Date of filing: 14.05.2012
(51) Int. Cl.: A22C 7/00

(54) **MACHINE FOR PRODUCING HAMBURGERS**

(71) Applicant: INDUSTRIAS GASER, S.L., 17190 Salt (Girona) (ES)
(72) Inventor: GARGANTA RIUBRUGENT, Narcís, E-17190 Salt (ES)
(74) Representative: Manresa Val, Manuel
(86) International application number: PCT/ES2012/070341
(87) International publication number: WO 2013/171348

(57) **Abstract**

It comprises a container (1) with meat inside it, a base (4) with a first passage opening (5), machine driving means (2), a disc (3) with at least one second passage opening (6) that rotates on an axis (7) perpendicular to its centre and with said disc (3) remaining partially under base (4).

## Description

Hamburger making machine, of the type comprising a container with meat inside it, a base with a first passage opening, machine driving means, a disc with at least a second passage opening that rotates on an axis perpendicular to its centre and where said disc remains partially under the base, characterized in that it comprises: a tray, which is below the second passage opening, covering at the bottom said passage opening, when said second passage opening lines up with the first passage opening, with this being the space where the hamburger is made, ejection means located on the disc, which push the hamburger out of the disc, and a guide, located on the perimeter of the disc, connected to the ejection means, making said ejection means swing in a downward/upward movement, with the tangential disc also being either separated a distance less than or equivalent to 2 mm from the base or with said tangential disc being separated a distance less than or equivalent to 2 mm from the tray.

### BACKGROUND TO THE INVENTION

In the state of the art different hamburger making machines are known that start with the minced meat which is placed in a container.

Thus, Spanish Patent No. P0536807, "PROCEDIMIENTO PARA LA FABRICACION DE HAMBURGUESAS", from 1984, in the name of Mr Jorge FONT ALBO, which relates to a method for making hamburgers. It consists in feeding seasoned, minced meat, by means of a rotary metering device, a moulding chamber, which is between pistons for pressing the meat and shaping the hamburger in each cycle. In the open parts of the chamber there extend continuous, flexible bands of cellophane, waxed paper or the like which, cut in sections are moved and applied against the surfaces of the hamburger in the pressing and shaping stage.

Also Spanish Patent No. 9000304 "MAQUINA ELABORADORA DE HAMBURGUESAS" is known, from 1990, in the name of Mr Emilio VILAR ARNAU, which relates to a hamburger making machine comprising, in a table-frame body, a vertical axis and large diameter cylinder, with the top part forming the loading chamber, which receives the mass of minced meat at the start, with the top base of the cylinder having an outlet hole, tilted, connected to the position of a changeable mould whose characteristics determine the shape and weight of the meat pieces produced. These are removed by a release and positioning device on a conveyor belt, on which respective pieces of protective paper made from natural material are applied to the two surfaces, the paper being obtained from two webs located above and below the plane of movement. A second conveyor belt transports the hamburgers towards the exit, on which path there exists an optical-electronic device associated with a control circuit that controls the operation of four fluid cylinders that drive different devices.

Spanish Patent No. 9100850 "MAQUINA PERFECCIONADA PARA LA PREPARACION DE HAMBURGUESAS" belongs to the state of the art, from 1991, in the name of Mr Jaime RAMON VILA, which relates to an improved machine for preparing hamburgers. This machine has in its loading hopper a helix divided into a pushing section and a compressing section, which drives the minced meat that is fed into that hopper, which, is assembled on a moveable, moulding horizontal revolver disc, which has several equidistant holes, which, depends on a transmitter unit determined by a geared motor located inside a lower box of the frame of said machine, with the top part of this box being completed with a device that feeds sheets of paper, suitable for being applied to the lower surface of said hamburgers, which are expelled by the action of an upward and downward plate, with both said paper feeder and the ejector being combined with transmissions connected with said geared motor, there also being in said box a hinged and sliding grill for receiving the prepared hamburgers, which pass immediately to a guide ramp and to a collector box.

Finally, it is worth mentioning that this applicant is the owner of Spanish Patent No. 9002030 "PERFECCIONAMIENTOS EN LAS MÁQUINAS PRODUCTORAS DE HAMBURGUESAS", from 1990, which relates to a series of improvements to hamburger making machines. The meat duct is provided with a gate for cutting the supply at intervals and a sheet for regulating the passage of the meat. The paper reels for wrapping the hamburger are fitted with respective inertia brakes and probes which, when the paper finishes, touch the reel core and stop the machine. One of said paper webs bears a series of marks which, when it passes through the cell, cause the cutting device to operate. Equally, there is a rod which separates the end of the minced meat next to the hamburger, and another rod which, when it ascends, due to a jam, it touches a micro switch and stops the machine. The excess pieces of cut paper are air-blown towards a bag.

Also a machine known as SUPER is known by the applicant firm, which loads the minced meat from a container to a disc with the corresponding mould, said minced meat is pressed, paper is added to it and then it is raised and removed from the mould with a spatula.

### BRIEF DESCRIPTION OF THE INVENTION

This application is within the sector of hamburger making machines, which make hamburgers ready for packaging.

The closest document is the said SUPER machine. As indicated above, this describes a machine that prepares the hamburger to then, lift the hamburger until it is outside the opening of the mould and removed with a spatula.

Said invention has been improved by this application as it makes hamburgers more quickly, with less complicated mechanics because it is not necessary to synchronise the rotate-raise-remove process in a small space.

This invention solves said problem, because it eliminates materials, increases the machine production speed and reliability, and therefore this machine in the long term is more economical.

It comprises a tray, under the disc, which acts as the lower lid for the opening of said disc, ejection means which prevent any part of the hamburger, now shaped in the opening, from remaining, and a guide that connects to the ejection means and which allows the upward and downward movement of the ejection means to always be the same.

Also the disc is separated with respect to the base and to the tray a minimum distance or otherwise they are made to touch, so that said elements act as a press and shape the hamburger perfectly.

Optionally, it comprises a dispenser of protective elements that is installed in the conveyor belt that carries the hamburgers, which already have a protective element (for example paper or a film) on the surface that is in contact with the conveyor belt, and which when the hamburger comes into contact with the container of protective elements, drag the protective element from the top, thus leaving the food protected.

The object of the present invention is a hamburger making machine, of the type comprising a container with meat inside it, a base with a first passage opening, machine driving means, a disc with at least a second passage opening that rotates on an axis perpendicular to its centre and where said disc remains partially under the base characterized in that it comprises: a tray, which remains under the second passage opening, covering the bottom of said passage opening, when said second passage opening aligns with the first passage opening, this being the space where the hamburger is made, with ejection means located on the disc, which push the hamburger out of said disc, and a guide, located on the perimeter of the disc, connected to the expulsion means, making said ejection means swing in a downward/upward movement, also with the tangential disc either separated a distance that is less than or equivalent to 2 mm from the base, or with said tangential disc being separated a distance that is less than or equivalent to 2 mm from the tray.

### BRIEF DESCRIPTION OF THE DRAWINGS

In order to facilitate the description, this report is accompanied by eight sheets of drawings that represent a practical embodiment case, which is cited as a non-limiting example of the scope of this invention:
- Figure 1 is a perspective view of the object of this invention
- Figure 2 is a view without the machine's outer housing and without the protective element dispenser;
- Figure 3 is a perspective view from the right of Figure 2 without the driving means;
- Figure 4 is a view of Figure 3, at the bottom, without the axes or gears;
- Figure 5 is a view of the base, the disc and the tray;
- Figure 6 is a view of Figure 5, in a side perspective, without the disc or the rods;
- Figure 7 is a perspective view from the left of the protective element dispenser, and
- Figure 8 is a partial side view, slightly tilted, of the said protective element dispenser.

### SPECIFIC EMBODIMENT OF THIS INVENTION

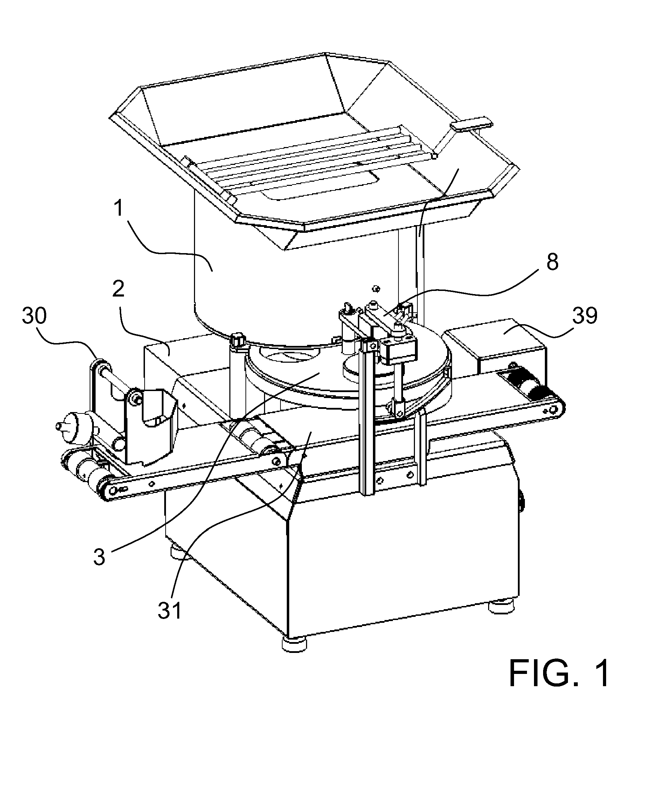

Thus way, Figure 1 shows a container 1, driving means 2, a disc 3, ejection means 8, a protective element dispenser 30, a transport element 31 with its driving means 39.

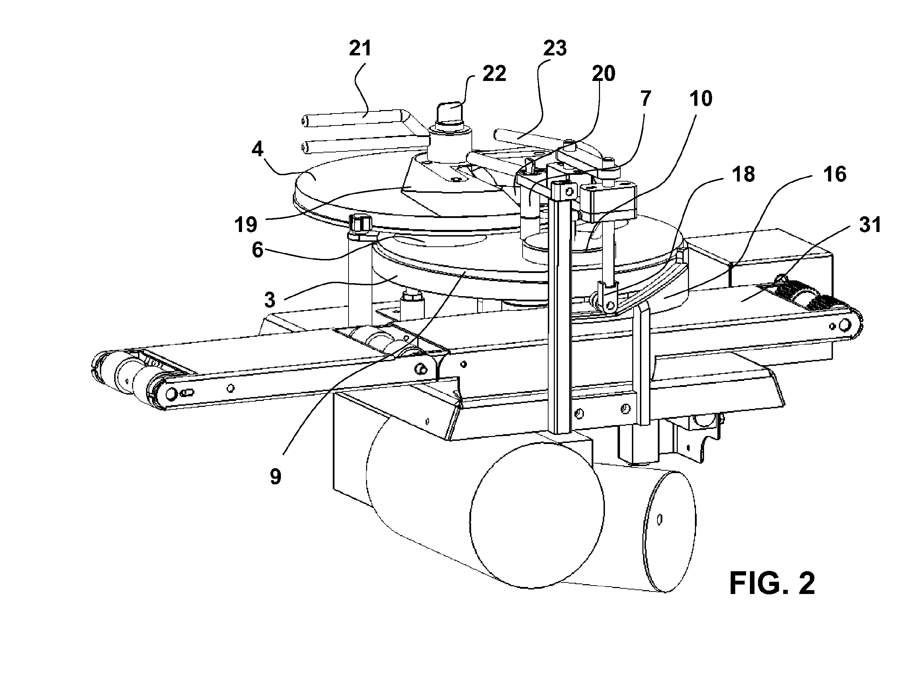

Figure 2 shows disc 3 with the second passage opening 6 and its axis 7, a base 4, a guide 9, a pushing means 10, an upward route 16 with a guiding means 18, a sector 19 with a third passage opening 20, first mixing rods 21 joined to an axis 22, second mixing rods 23 and transport element 31.

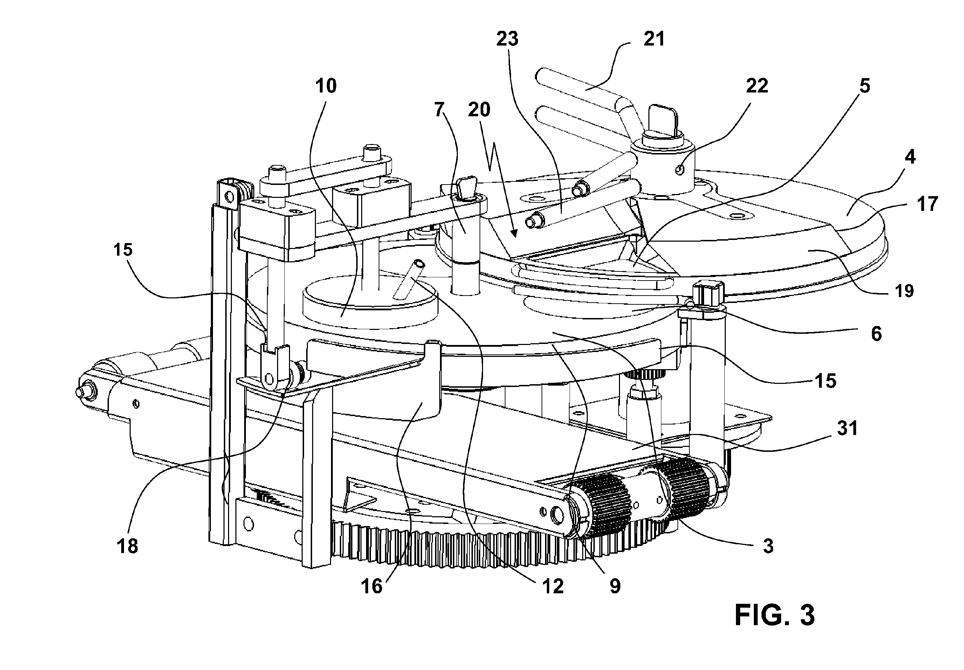

Figure 3 shows disc 3 with the second passage opening 6 and its axis 7, base 4 with the first passage opening 5, guide 9, pushing means 10, blower 12, a downward route 15, upward route 16 with a guiding means 18, sector 19 with the third passage opening 20 and the first tilted plane 17, first mixing rods 21 joined to axis 22, second mixing rods 23 and transport element 31.

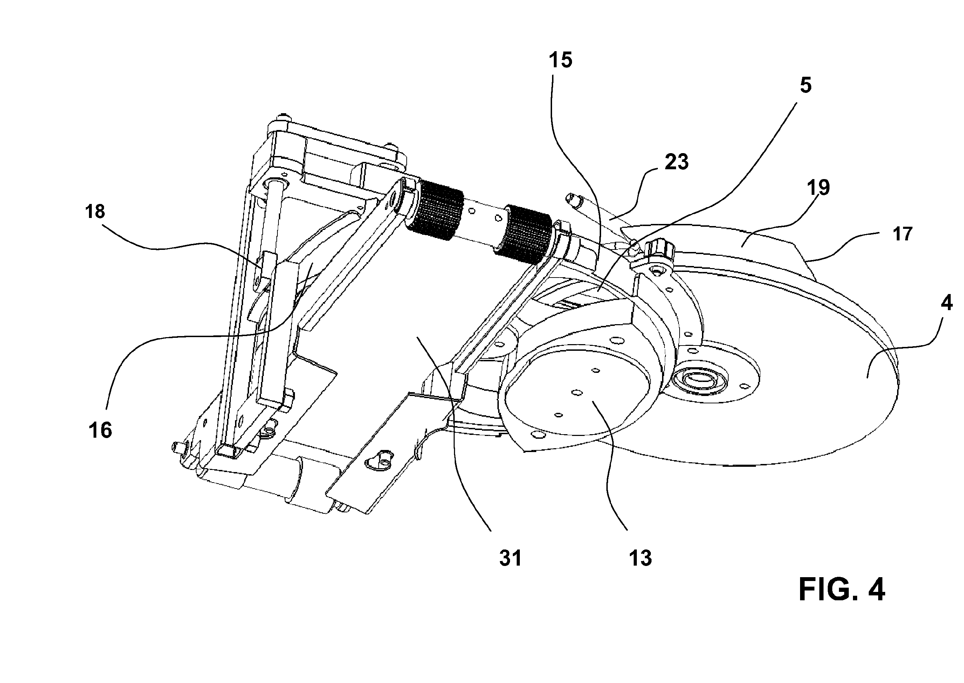

Figure 4 shows base 4 with first passage opening 5, a tray 13, downward route 15, upward route 16 with a guiding means 18, sector 19 with first tilted plane 17, second mixing rods 23 and transport element 31.

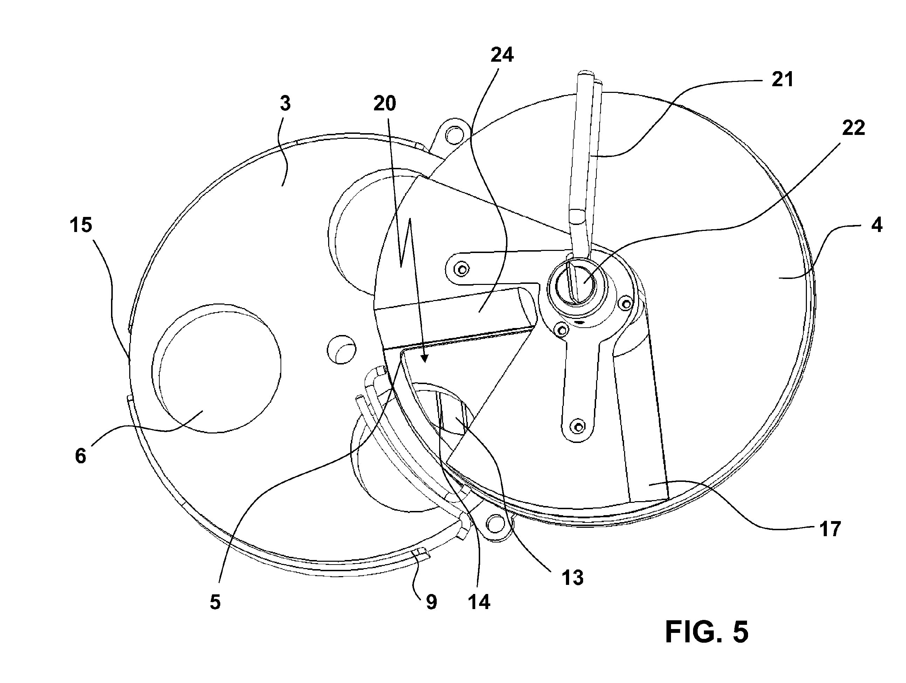

Figure 5 shows disc 3 with second passage opening 6, base 4 with first passage opening 5, guide 9, tray 13 with its grooves 14, downward route 15, sector 19 with third passage opening 20 and first 17 and second tilted plane 24 and first mixing rods 21 joined to axis 22.

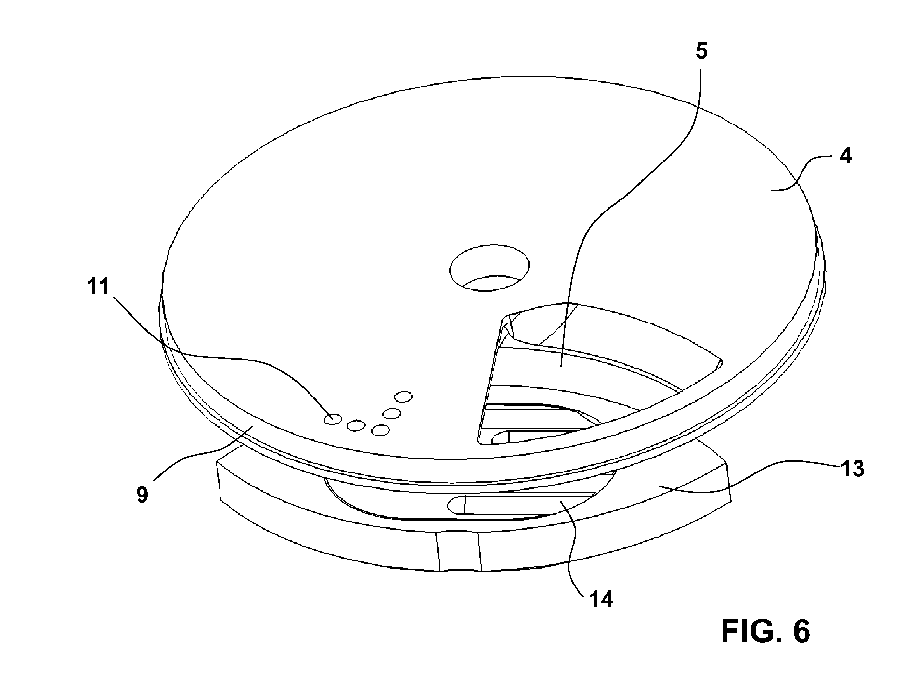

Figure 6 shows base 4 with first passage opening 5 and perforations 11, guide 9, and tray 13 with its grooves 14.

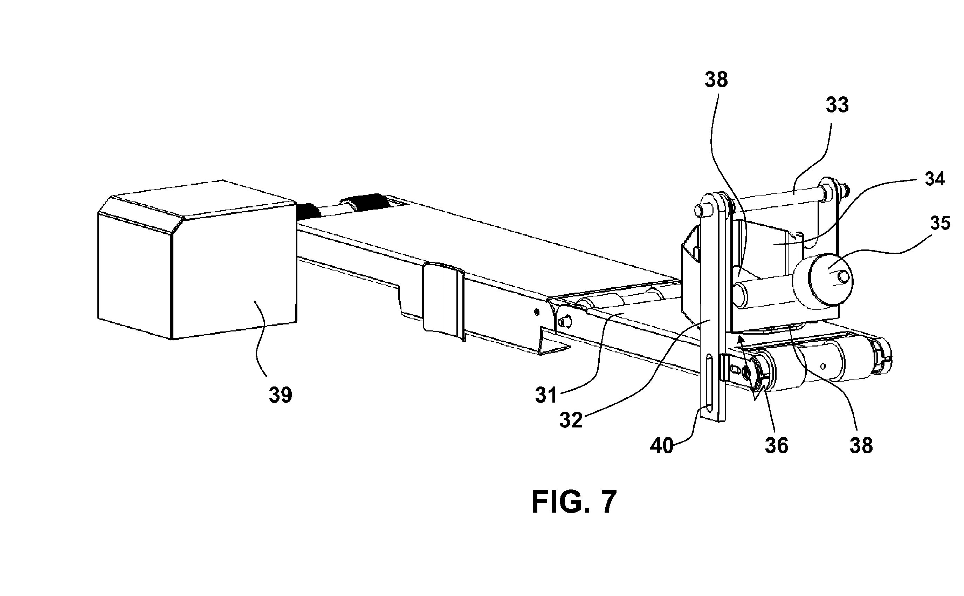

Figure 7 shows driving means 9, transport element 31, an arm 32 with a height adjuster 40, a rotation axis 33, a container of protective elements 34 with their base 36, a counterweight 35 and a hold-down plate 38.

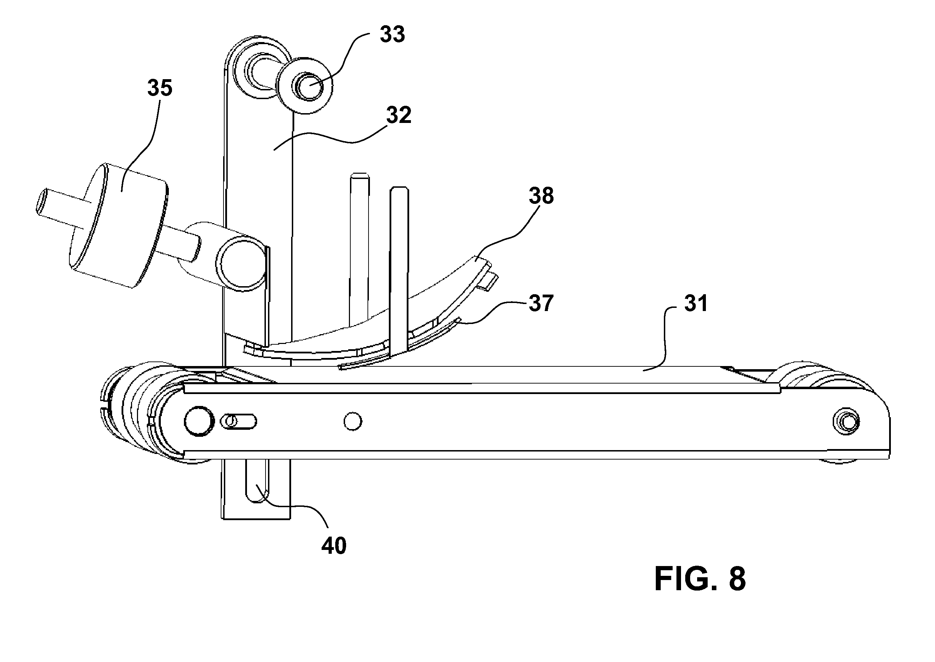

Lastly, Figure 8 shows transport element 31, arm 32 with height adjuster 40, rotation axis 33, counterweight 35, guiding flanges 37 and hold-down plate 38.

Thus, in a specific embodiment, the machine that is the object of this invention would operate as follows.

Minced meat would be fed inside container 1. Said minced meat is placed on base 4 that comprises, in turn, a first passage opening 5. The first passage opening is for feeding the minced meat to the disc 3, as detailed below.

Optionally, the base can include perforations 11, continuing on from first passage opening 5 taking as a reference the rotation direction of disc 3. They are used when minced meat remains between base 4 and disc 3, and this minced meat is to be returned to the container thanks to said perforations 11.

Disc 3 would operate from a single second passage opening 6. Depending on the size of disc 3 and the productivity to be given to the machine (both in terms of the size of the hamburgers and the production speed) different second passage openings 6 can be formed, such as for example three, which is the number of second passage openings 6 shown in the drawings accompanying this invention.

Disc 3 rotates on an axis 7 which is perpendicular to its centre.

Disc 3 in turn remains partially under base 4, which is the transfer area (when respective openings 5, 6 for the minced meat in container 1 line up with disc 3).

Under disc 3, and in the transfer area, a tray 13 is positioned. Said tray 13 remains under the second passage opening 6, covering at the bottom said passage opening 6.

Said tray 13 is important because when said second passage opening 6 aligns with first passage opening 5 said tray 13 prevents the minced meat from falling out through second passage opening 6, also creating a space with the walls of second passage opening 6 which is the space where the hamburger is made.

Ejection means 8 are located on disc 3, in cantilever arrangement, in such a way that they are responsible for pushing the hamburgers that have been prepared out of disc 3 and second passage opening 6.

On the perimeter of disc 3 a guide 9 is formed. Said guide is linked or connected to said ejection means 8. Its function is to cause said ejection means 8 to swing with a downward/upward movement coinciding said movement with the ejection motion of the hamburger from second passage opening 6.

Disc 3, tray 13 and base 4 adopt a specific arrangement to allow the minced meat to be pressed and thus converted into a hamburger.

So, disc 3 is very close to base 4, so close that the distance between them in the transfer area is equivalent to or less than 2 mm or otherwise the base is tangential, so that they touch.

The same occurs with base 4 and said disc 3, that is the distance between them in the transfer area is equivalent to or less than 2 mm or it is tangential, so that they touch. It is important because tray 13 is the lower cover of second passage opening 6 and if the minced meat is not duly pressed when second passage opening 6 leaves tray 13, the hamburger would fall.

One of the possibilities of ejection means 8 may consist in a pushing means 10, like a piston, which is located on the hamburger when it is going to be released from disc 3 and which pushes it in a downward movement.

A blower 12 could also be added that projects air onto the hamburger from pushing means 10 when it is pushing the hamburger off disc 3. The advantage of using a blower is that if the hamburger were stuck to the walls of second passage opening 6, the air that would be supplied by the blower 12 would easily release the hamburger, therefore preventing part of it being misshaped.

Optionally guide 9 comprises a guiding means 18 linked to said ejection means 8. Guiding means 18 would follow the route marked by guide 9.

Guide 9 can also comprise a downward route 15 for every second passage opening 6 taking as a reference the rotation direction of disc 3 which lowers said ejection means 8, that is, that coincides when the guiding means 18 faces downward route 15 with the lowering of ejection means 8 over the hamburger.

It also comprises a progressive upward route 16 continuing on from downward route 15, that is, once pushing means 10 has lowered guide 9 changes direction so that pushing means 10 recovers its initial position.

Also it checks to see that there is an increase in the upward period of ejection means 8, that is, the downward and upward movement cannot be done as an instant movement, and so in order to facilitate the upward movement the guide has a space, upward route 16, which gives this margin to guiding means 18 to start the upward route and raise pushing means 10 to the initial position.

In order to facilitate the upward movement even more, if possible, of pushing means 10, a tilted tract is arranged that directs guiding means 18 in its progressive upward route 16, and this way the route of the guiding means 18 can be varied making it go up quicker if desired without having to change the route of guide 9 or of the progressive upward route 16.

Tray 13 can comprise grooves 14 that would help to prevent the minced meat sticking to tray 13 when disc 3 and tray 13 are separated.

It has been envisaged that the machine can include mixing means inside container 1. This means that the minced meat is always spongy and at the same time, that no meat remains in part of the container, which could lead to this minced meat being wasted.

The mixing means comprise a sector 19 attached to base 4, with a third passage opening 20 that aligns with first passage opening 5 to be able to transfer the minced meat to second passage opening 6.

It also has first mixing rods 21 that rotate with respect to an axis 22 and separated from one another, which act as blades, stirring the minced meat.

It ends with second mixing rods 23 attached to container 1 inserted between first mixing rods 21, which would break up any clumps of minced meat.

So first of all the minced meat would be poured into container 1 and driving means 2 would rotate axis 22 so that it turned first mixing rods 21, separating any clumps of minced meat that may have formed.

First tilted plane 17 of sector 19 helps to raise the minced meat from the bottom of the container.

At the same time, axis 7 corresponding to disc 3 would start up.

The minced meat, even though base 4 has first passage opening 5, would not fall because disc 3 would act as a lower cover until it reached second passage opening 6.

Therefore, it is important that the distance between disc 3 and base 4 is minimum (less than 2 mm or that they rub each other or are tangential) so as to keep the minced meat inside container 1.

When thanks to the rotation of disc 3 second passage opening 6 reaches first passage opening 5 the minced meat falls inside second passage opening 6 which at the same time is covering tray 13 at the bottom.

The minced meat quickly fills second passage opening 6 and due to the rotation of disc 3 first passage opening 5 remains covered by second passage opening 6 pressing the minced meat inside second passage opening 6.

Second tilted plane 24 inside the sector prevents, thanks to the rotation, that the minced meat does not accumulate inside third passage opening 20 and that instead part of it returns to container 1.

As explained before, if there is excess minced meat between disc 3 and base 4, it could be returned to container 1 containers to perforations 11.

Then second passage opening 6 with the minced meat pressed inside it also abandons tray 13 and head towards ejection means 8.

On the perimeter of disc 3 there is a guide 9 that is used by guiding means 18 to know when second opening passage 6 is facing pushing means 10. In this embodiment guiding means 18 is used, but any other means could be used, such as a sensor that detects points used like guide 9 and that define when pushing means 10 must be activated.

When guiding means 18 starts downward route 15, pushing means 10 which is integral with it, starts the downward movement too until it pushes the hamburger downwards, expelling it from second passage opening 6.

Blower 12, which is optional, helps the hamburger to separate from second passage opening 6, so that none of the meat remains in second passage opening 6 and that the hamburger does not lose its shape.

To recover the initial position of pushing means 10 it has been envisaged that upward route 16 be progressive, because, as indicated above, it is difficult to obtain an instant downward/upward movement of pushing means 10, and therefore it needs its time and space to return to its initial position.

The inventor has found that adding a tilted track, like an upward route 16 (as shown in Figures 2, 3 and 4) helps, and that it can adjust the time period of said upward route 16, that is, by varying the tilt it is possible to increase or decrease the upward speed of guiding means 18.

Said tilted track 16 could be removable to allow users to consider whether they want a tilted track 16 with one shape or another depending on how quick users want guiding means 18 to move upwards to the initial position.

Also, depending on the rotation speed of disc 3 it can be envisaged that when guiding means 18 descends and until it is raised completely, recovering its initial height, disc 3 reaches a lower speed to facilitate said downward and upward operations.

The expelled hamburger falls onto transport elements 31.

The option of adding a protective element device 30 can be considered as well.

The protective element device 30, once installed will remain on a transport element 31, in this embodiment a conveyor belt, which transports the hamburger from one point to another.

Dispenser 30 comprises arm 32 that links the unit to conveyor belt 31.

It also comprises a rotation or swinging axis 33, which is linked to said arm 32, arranged in this embodiment, perpendicular to arm 32.

Rotation axis 33 carries in cantilever arrangement (Fig. 7) a container of protective elements 34. Inside said container of protective elements 34 is where protective elements 34 are stored, which are to be dispensed subsequently.

The container of protective elements 34 comprises a bottomless base 36, so that the protective elements can exit to the outside, when they come into contact with the hamburger on conveyor belt 31.

Said container of protective elements 34 also comprises on said base 36 two guiding flanges 37 where the protective element to be dispensed is located and accumulates.

At the top, said container 34 is closed by a hold-down plate 38 that is located on the protective elements.

Dispenser 30 is completed with a counterweight 35 on one of the sides of said container of protective elements 34, which allows container 34 to return to its original position once it has swing forward. Said counterweight 35 is also used to regulate the inclination of container 34 with respect to conveyor belt 31 and therefore it regulates the position of the protective element in the area of guiding flanges 37.

Thus, guiding flanges 37 remain located on conveyor belt 31 at a distance equivalent to the thickness of the hamburger to be covered. This distance can be known beforehand because it is the height of disc 3, which coincides with the depth of second passage opening 6.

As indicated above, the inclination of guiding flanges 37 is adjusted by counterweight 35.

This way, if the conveyor belt 31 is started by driving means 39, they would transport the hamburger to be covered, previously expelled from disc 3. As explained above, the hamburger can have or not a bottom protection, whereby in the first case it would only be necessary to arrange the top protection, which will be put into place below.

When the hamburger that is moved by conveyor belt 31 reaches guiding flanges 37, the actual humidity of the hamburger sticks to the protective element which remains on sight between said guiding flanges 37.

As it advances the hamburger pushes the protective element outwards until said protective element is completely stuck to the hamburger.

Paper container 34 is formed so that it can swing based on rotation axis 33 and this way it can help the protective element to come out.

Once the protective element has come out, hold-down plate 38 pushes the protective elements downwards and leaves another protective element ready on the guiding flanges 37.

In order to be able to adapt to the different thicknesses of the hamburgers it has been envisaged that the dispenser comprises a height adjuster for the container of protective elements 34.

Said height regulator 40, in this specific embodiment, is located on arm 32, so that when arm 32 is moved upwards or downwards, the container of protective elements 34 is also moved.

In order to facilitate the exit of the protective elements from inside container 34 optionally guiding flanges 37 are convex with respect to conveyor belt 31, and this way, if they swing they also allow the protective element to adhere to the hamburger.

In the same way, in order to facilitate the position of the protective elements in the guiding flanges 37, hold-down plate 38 is also convex with respect to conveyor belt 31.

Protective elements 34 to be used can be sheets of paper or protective film.

After protecting the hamburger with the protective element it can be packaged.

This invention describes a new hamburger making machine. The examples mentioned herein do not limit this invention, and therefore it can have different applications and/or adaptations, all within the scope of the following claims.

## Claims

1. Hamburger making machine, of the type comprising a container (1) with meat inside it, a base (4) with a first passage opening (5), machine driving means (2), a disc (3) with at least one second passage opening (6) that rotates on an axis (7) perpendicular to its centre and with said disc (3) remaining partially under base (4) **characterized in that** it comprises:
- a tray (13) that remains under second passage opening (6), covering at the bottom said opening passage (6), when said second passage opening (6) aligns with first passage opening (5), with this being the space where the hamburger is made.
- ejection means (8) located on disc (3) which push the hamburger off disc (3), and
- a guide (9) located on the perimeter of disc (3), connected to ejection means (8), making said ejection means (8) swing in a downward/upward movement,
with disc (3) also being tangential or separated a distance less than or equivalent to 2 mm from base (4) and with said disc (3) being tangential or separated a distance less than or equivalent to 2 mm from tray (13).

2. Machine, according to claim 1, **characterized in that** it has perforations (11), located on base (4), continuing on from first passage opening (5) taking as a reference the rotation direction of disc (3).

3. Machine, according to claim 1, **characterized in that** ejection means (8) comprise a pushing means (10) that is located on the hamburger and which pushes it in a downward movement.

4. Machine, according to claim 3, **characterized in that** ejection means (8) comprise a blower (12) which projects air on the hamburger from pushing means (10).

5. Machine, according to claim 1 or 3 or 4, **characterized in that** guide (9) comprises a guiding means (18) linked to the expulsion means, with said guiding means (18) following:
- a downward route (15) for each second passage opening (6) taking as a reference the rotation direction of disc (3) which lowers ejection means (8),
- a progressive upward route (16) continuing on from downward route (15), which increases the upward period of ejection means (8).

6. Machine, according to claim 5, **characterized in that** it comprises a tilted track that directs guiding means (18) along its progressive upward route (16).

7. Machine, according to claim 1, **characterized in that** tray (13) comprises grooves (14).

8. Machine, according to claim 1, **characterized in that** container (1) with meat inside it, comprises mixing means that comprise a sector (19) attached to base (4), with a third passage opening (20) that aligns with first passage opening (5), first mixing rods (21) like blades, that rotate with respect to an axis (22) and separated from one another, and second mixing rods (23) attached to container (1) inserted between first mixing rods (21).

9. Machine, according to claim 3 or 4 or 5 or 6, **characterized in that** it comprises a dispenser of protective elements for hamburgers, on a transport element (31) that transports the hamburger once expelled by ejection means (8) from one point to another, an arm (32), a rotation or swinging axis (33), linked to said arm (32), a container of protective elements (34) held in cantilever arrangement by said rotation axis (33), with said container of protective elements (34) comprising a bottomless base (36), with two guiding flanges (37) where the protective element to be dispensed is located, a hold-down plate (38) that is located on the protective element, and a counterweight (35) on one of the sides of said container of protective elements (34), with guiding flanges (37) being located on conveyor belt (31) at a distance equivalent to the thickness of the hamburger to be covered.

10. Dispenser, according to claim 9, **characterized in that** it comprises an adjuster of the height of the container of protective elements (34).

11. Dispenser, according to claim 10, **characterized in that** said height adjuster (40) is located on arm (32).

12. Dispenser, according to claim 9, **characterized in that** flanges (37) are convex with respect to transport element (31).

13. Dispenser, according to claim 12, **characterized in that** hold-down plate (38) is convex with respect to transport element (31).

14. Machine, according to any of the preceding claims, **characterized in that** it comprises means for dispensing a lower protection for the hamburger.
